# EUROPEAN PATENT APPLICATION

(11) **EP 4 174 026 A1**
(43) Date of publication of application: **03.05.2023**
(21) Application number: 21886900.6
(22) Date of filing: 29.10.2021
(51) Int. Cl.: C01G 53/00, C01G 53/04, H01M 4/36, H01M 4/62, H01M 4/525, H01M 4/505

(54) **CATHODE ACTIVE MATERIAL AND PREPARATION METHOD THEREFOR**

(30) Priority: 30.10.2020 KR 20200142916
(71) Applicant: Lg Chem, Ltd., Seoul 07336 (KR)
(72) Inventor: SEO, You Kyong, Daejeon 34122 (KR); GU, Ye Hyeon, Daejeon 34122 (KR); SHIM, Jong Hyun, Daejeon 34122 (KR); JEONG, Jin Hoo, Daejeon 34122 (KR)
(74) Representative: Hoffmann Eitle
(86) International application number: PCT/KR2021/015465
(87) International publication number: WO 2022/092906

(57) **Abstract**

The present invention relates to a method of preparing a positive electrode active material, which includes a first step of preparing a sintered product by mixing a positive electrode active material precursor and a lithium-containing raw material and sintering the mixture, a second step of preparing a lithium transition metal oxide having a coating layer including a lithium chelate compound formed thereon by washing the sintered product using a washing solution, in which a coating layer precursor including a chelate anion is included, and drying the sintered product, and a third step of preparing a lithium transition metal oxide having a coating layer including a Li-M-O solid solution (where M is at least one element selected from Nb, Co, Ti, V, Zr, Si, Al, and Mo) formed thereon by performing a heat treatment on the lithium transition metal oxide having the coating layer including the lithium chelate compound formed thereon, wherein the chelate anion includes at least one metal selected from Nb, Co, Ti, V, Zr, Si, Al, and Mo and at least one ligand selected from oxalate, nitrite, carboxylate, borate, phosphate, and acetate, and a positive electrode active material.

## Description

### TECHNICAL FIELD

### Cross-reference to Related Applications

This application claims priority from Korean Patent Application No. 10-2020-0142916, filed on October 30, 2020, the disclosure of which is incorporated by reference herein.

### Technical Field

The present invention relates to a positive electrode active material and a method of preparing the same.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal oxides have been used as a positive electrode active material of the lithium secondary battery, and, among these oxides, a lithium cobalt composite metal oxide of LiCoO₂ having a high operating voltage and excellent capacity characteristics has been mainly used. However, since the LiCoO₂ has very poor thermal properties due to an unstable crystal structure caused by lithium deintercalation and is expensive, there is a limitation in using a large amount of the LiCoO₂ as a power source for applications such as electric vehicles.

Lithium manganese composite metal oxides (LiMnO₂ or LiMn₂O₄), lithium iron phosphate compounds (LiFePO₄, etc.), or lithium nickel composite metal oxides (LiNiO₂, etc.) have been developed as materials for replacing the LiCoO₂. Among these materials, research and development of the lithium nickel composite metal oxides, in which a large capacity battery may be easily achieved due to a high reversible capacity of about 200 mAh/g, have been more actively conducted. However, the LiNiO₂ has limitations in that the LiNiO₂ has poorer thermal stability than the LiCoO₂ and, when an internal short circuit occurs in a charged state due to an external pressure, the positive electrode active material itself is decomposed to cause rupture and ignition of the battery.

Accordingly, as a method to improve low thermal stability while maintaining the excellent reversible capacity of the LiNiO₂, a nickel cobalt manganese-based lithium composite transition metal oxide, in which a portion of nickel (Ni) is substituted with manganese (Mn) and cobalt (Co), or a nickel cobalt aluminum-based lithium composite transition metal oxide, in which a portion of Ni is substituted with Mn and Aluminum (Al), has been developed.

Lithium by-products, such as LiOH and Li₂CO₃, which are not reacted during a preparation process, are present on a surface of the lithium composite transition metal oxide. In order to minimize these lithium by-products, conventionally, after a sintered product obtained by sintering a positive electrode active material precursor and a lithium-containing raw material is washed, a method of coating the sintered product with an inorganic oxide, such as Al₂O₃, was used. However, in this case, there is a problem in that cost is increased due to a two-step process of washing process and coating process. In addition, since coating uniformity is low due to the use of the inorganic oxide powder, a thick coating layer is mainly formed only on a surface of a secondary particle. Thus, since it is difficult to achieve excellent lithium ion conductivity and electrical conductivity and a side reaction with an electrolyte easily occurs, there is a problem in that capacity, output, and lifetime of the battery are reduced.

Accordingly, there is a need for a method of preparing a positive electrode active material with excellent capacity characteristics and life characteristics by suppressing the side reaction with the electrolyte by enabling uniform and thin coating on surfaces of primary particles of the positive electrode active material while being able to minimize residual lithium that may remain on the surface of the positive electrode active material.

### DISCLOSURE OF THE INVENTION

### TECHNICAL PROBLEM

An aspect of the present invention provides a method of preparing a positive electrode active material, which may minimize residual lithium that may remain on a surface of the positive electrode active material and may solve the problem of reducing capacity and output of a battery while reducing process steps, and the positive electrode active material thus prepared.

### TECHNICAL SOLUTION

According to an aspect of the present invention, there is provided a method of preparing a positive electrode active material which includes: a first step of preparing a sintered product by mixing a positive electrode active material precursor, which is a transition metal hydroxide or transition metal oxyhydroxide, and a lithium-containing raw material and sintering the mixture; a second step of preparing a lithium transition metal oxide having a coating layer including a lithium chelate compound formed thereon by washing the sintered product using a washing solution, in which a coating layer precursor including a chelate anion is included, and drying the sintered product; and a third step of preparing a lithium transition metal oxide having a coating layer including a lithium (Li)-M-O solid solution (where M is at least one element selected from group consisting of niobium (Nb), cobalt (Co), titanium (Ti), vanadium (V), zirconium (Zr), silicon (Si), aluminum (Al), and molybdenum (Mo)) formed thereon by performing a heat treatment on the lithium transition metal oxide having the coating layer including the lithium chelate compound formed thereon, wherein the chelate anion includes at least one metal selected from the group consisting of Nb, Co, Ti, V, Zr, Si, Al, and Mo and at least one ligand selected from the group consisting of oxalate, nitrite, carboxylate, borate, phosphate, and acetate.

According to another aspect of the present invention, there is provided a positive electrode active material including a lithium transition metal oxide which includes a secondary particle formed by aggregation of primary particles, wherein a coating layer including a Li-M-O solid solution (where M is at least one element selected from the group consisting of Ti, V, Co, Zr, Nb, Si, Al, and Mo) is formed on a surface of the primary particle.

### ADVANTAGEOUS EFFECTS

The present invention may minimize a lithium by-product, which may remain on a surface of a positive electrode active material, by using a washing solution in which a coating layer precursor including a chelate anion, which selectively reacts with the lithium by-product remaining in a sintered product, is included.

Also, process steps may be reduced by performing a washing process and a coating process at the same time using the washing solution.

In addition, since lithium ion conductivity and electrical conductivity of a coating layer formed from the coating layer precursor are excellent, there is an advantage that a lithium secondary battery having low internal resistance may be resultantly achieved.

### BRIEF DESCRIPTION OF THE DRAWINGS

FIG. 1 is a scanning electron microscope (SEM) image of positive electrode active material 1 prepared in Example 1; and
FIG. 2 is transmission electron microscope (TEM)-energy dispersive X-ray spectroscopy (EDS) mapping data of the positive electrode active material 1 prepared in Example 1.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, the expression "primary particle" denotes the smallest unit of particles recognized when the positive electrode active material particles are observed through a scanning electron microscope, and the expression "secondary particle" denotes a secondary structure formed by aggregation of a plurality of the primary particles.

Hereinafter, the present invention will be described in more detail.

### Method of Preparing Positive Electrode Active Material

The present inventors have found that, in a case in which a washing solution, in which a coating layer precursor including a chelate anion, which selectively reacts with a lithium by-product remaining in a sintered product, is included, is used in a washing process during preparation of a lithium transition metal oxide, the lithium by-product, which may remain on a surface of a positive electrode active material, may be minimized, and a coating layer with excellent lithium ion conductivity and electrical conductivity may be formed at the same time, thereby leading to the completion of the present invention.

A method of preparing a positive electrode active material according to the present invention includes: a first step of preparing a sintered product by mixing a positive electrode active material precursor, which is a transition metal hydroxide or transition metal oxyhydroxide, and a lithium-containing raw material and sintering the mixture; a second step of preparing a lithium transition metal oxide having a coating layer including a lithium chelate compound formed thereon by washing the sintered product using a washing solution, in which a coating layer precursor including a chelate anion is included, and drying the sintered product; and a third step of preparing a lithium transition metal oxide having a coating layer including a lithium (Li)-M-O solid solution (where M is at least one element selected from the group consisting of niobium (Nb), cobalt (Co), titanium (Ti), vanadium (V), zirconium (Zr), silicon (Si), aluminum (Al), and molybdenum (Mo)) formed thereon by performing a heat treatment on the lithium transition metal oxide having the coating layer including the lithium chelate compound formed thereon, wherein the chelate anion includes at least one metal selected from the group consisting of Nb, Co, Ti, V, Zr, Si, Al, and Mo and at least one ligand selected from the group consisting of oxalate, nitrite, carboxylate, borate, phosphate, and acetate.

In the present specification, the metal in the at least one metal selected from the group consisting of Nb, Co, Ti, V, Zr, Si, Al, and Mo is meant to include a transition metal, a metalloid, and other metals.

Hereinafter, each step of the method of preparing a positive electrode active material will be described in detail.

### First Step

The first step is a step of preparing a sintered product by mixing a positive electrode active material precursor, which is a transition metal hydroxide or transition metal oxyhydroxide, and a lithium-containing raw material and sintering the mixture.

The positive electrode active material precursor may include a secondary particle formed by aggregation of primary particles, and the positive electrode active material precursor may have a composition represented by the following Formula 1 or Formula 2.

[Formula 1] [NiₐCO_{b}M¹_{c}M²_{d}] (OH)₂

[Formula 2] [NiₐCO_{b}M¹_{c}M²_{d}] O • OH

In Formula 1 and Formula 2,
M¹ is at least one element selected from the group consisting of manganese (Mn) and aluminum (Al),
M² is at least one element selected from the group consisting of boron (B), magnesium (Mg), calcium (Ca), silicon (Si), titanium (Ti), vanadium (V), chromium (Cr), iron (Fe), zinc (Zn), gallium (Ga), yttrium (Y), zirconium (Zr), niobium (Nb), molybdenum (Mo), tantalum (Ta), and tungsten (W), and
0.6≤a<1, 0<b≤0.4, 0<c≤0.4, 0≤d≤0.1, and a+b+c+d=1.
a represents an atomic fraction of nickel among metallic elements in the precursor, wherein a may satisfy 0.6≤a<1, 0.6≤a≤0.98, or 0.7≤a≤0.95.
b represents an atomic fraction of cobalt among the metallic elements in the precursor, wherein b may satisfy 0<b≤0.4, 0.01≤b≤0.4, or 0.01≤b≤0.3.
c represents an atomic fraction of an M¹ element among the metallic elements in the precursor, wherein c may satisfy 0<c≤0.4, 0.01≤c≤0.4, or 0.01≤c≤0.3.
d represents an atomic fraction of an M² element among the metallic elements in the precursor, wherein d may satisfy 0≤d≤0.1 or 0≤d≤0.05.

The lithium-containing raw material may include at least one selected from the group consisting of lithium hydroxide hydrate, lithium carbonate, and lithium hydroxide. The lithium-containing raw material may specifically be a lithium hydroxide hydrate, for example, LiOH·H₂O. In this case, reactivity between the lithium-containing raw material and the precursor having a high atomic fraction of nickel among the metallic elements in the precursor may be improved.

The positive electrode active material precursor and the lithium-containing raw material may be mixed in a molar ratio of 1:1.0 to 1:1.10, particularly 1:1.03 to 1:1.08, and more particularly 1:1.05 to 1:1.07. In a case in which the lithium-containing raw material is mixed within the above range, a reduction in capacity of the positive electrode active material may be prevented.

The sintering of the first step may be performed in a temperature range of 700°C to 950°C. The sintering temperature may specifically be in a range of 750°C to 850°C, for example, 750°C to 800°C. In a case in which the sintering temperature is within the above range, crystals may be formed in an appropriate size, and processing costs may be reduced.

The sintering of the first step may be performed in an oxygen atmosphere. In this case, a sintered product having a structurally stable phase may be formed.

The sintering of the first step may be performed for 5 hours to 24 hours. The sintering may be specifically performed for 5 hours to 12 hours, for example, 5 hours to 10 hours. In a case in which the sintering time is within the above range, sintering may be performed well without deviation (uniformly) for each sintering position.

### Second Step

The second step is a step of preparing a lithium transition metal oxide having a coating layer including a lithium chelate compound formed thereon by washing the sintered product using a washing solution in which a coating layer precursor including a chelate anion is included.

The chelate anion included in the coating layer precursor includes at least one metal selected from the group consisting of Ti, V, Co, Zr, Nb, Si, Al, and Mo and at least one ligand selected from the group consisting of oxalate, nitrite, carboxylate, borate, phosphate, and acetate.

The second step is a process of removing lithium by-products that are impurities present in the sintered product, particularly, Li₂CO₃ which is not readily soluble in a washing solvent, and forming a coating layer including a lithium chelate compound at the same time. In the present invention, process steps may be reduced by performing a washing process and a coating process at the same time using the washing solution.

The chelate anion included in the coating layer precursor may specifically include at least one transition metal selected from the group consisting of Nb, Co, and Ti and at least one ligand selected from the group consisting of oxalate and nitrite. The chelate anion may more specifically be at least one selected from the group consisting of [NbO(C₂O₄)₂]⁻, [Co(NO₂)₆]³⁻, and [TiO(C₂O₄)₂]⁻. In this case, the impurities may be easily removed due to high reactivity of the chelate anion with the lithium by-product, and, since the coating layer precursor including the chelate anion is dissolved well in the solvent of the washing solution, a coating layer including a lithium chelate compound may be formed even on primary particles of the lithium transition metal oxide.

The coating layer including the lithium chelate compound may be a compound formed by reacting the lithium by-product with the coating layer precursor including the chelate anion. For example, during an acid-base reaction between Li₂CO₃ and the coating layer precursor including the chelate anion, lithium ions and chelate anions may be bonded to form a lithium chelate compound (ex. LiNbO(C₂O₄)₂, Li₃Co(NO₂)₆, LiTiO(C₂O₄)₂). As a result, in the second step, since the washing process is performed using the washing solution in which the coating layer precursor including the chelate anion, as an anionic inorganic salt which selectively reacts with the lithium by-product remaining in the sintered product, is included, the lithium by-product, which may remain on the surface of the positive electrode active material, may be minimized. The coating layer including the lithium chelate compound becomes a coating layer including a Li-M-O solid solution (where M is at least one selected from the group consisting of Ti, V, Co, Zr, Nb, Si, Al, and Mo), which is a coating layer with excellent lithium ion conductivity and electrical conductivity, after a third step to be described later.

The coating layer precursor may further include at least one cation selected from the group consisting of an ammonium salt (NH₄⁺), a sodium salt (Na⁺), a potassium salt (K⁺), a hydrogen cation (H⁺), and a lithium salt (Li⁺). That is, the coating layer precursor may include the chelate anion and the cation.

The coating layer precursor may be at least one selected from the group consisting of ammonium niobium oxalate, sodium cobalt nitrite, ammonium titanium oxalate, and sodium titanium oxalate. In this case, an effect of removing residual lithium may appear simultaneously with the formation of the inorganic oxide coating layer.

The washing of the second step may be performed by adding the washing solution in an amount of 50 parts by weight to 300 parts by weight, particularly 100 parts by weight to 200 parts by weight, and more particularly 100 parts by weight to 150 parts by weight based on 100 parts by weight of the sintered product. In a case in which the amount of the washing solution is within the above range, the sintered product is not gelated, and lithium in a structure of the sintered product may not be dissolved out.

The coating layer precursor included in the washing solution may be included in an amount of 0.1 part by weight to 5 parts by weight based on 100 parts by weight of the sintered product. The coating layer precursor may specifically be included in an amount of 0.1 part by weight to 2 parts by weight, for example, 0.2 part by weight to 1.8 parts by weight based on 100 parts by weight of the sintered product. In this case, the lithium by-product, which may remain on the surface of the positive electrode active material, may be minimized, and the coating layer including the lithium chelate compound may be appropriately formed.

The solvent of the washing solution may be at least one selected from the group consisting of deionized water, distilled water, and ethanol. The solvent of the washing solution may be specifically deionized water and/or distilled water. In this case, solubility of the coating layer precursor including the chelate anion may be increased, and, accordingly, the reactivity between the lithium by-product and the chelate anion may increase so that the coating layer including the lithium chelate compound may be well formed. Specifically, in a case in which the sintered product includes a secondary particle formed by aggregation of primary particles, the washing solution, in which a large amount of the coating layer precursor is dissolved, may penetrate up to a surface of the primary particle, and, as a result, a coating layer including a Li-M-O solid solution (where M is at least one selected from the group consisting of Ti, V, Co, Zr, Nb, Si, Al, and Mo) may be formed on the surface of the primary particle.

The solvent of the washing solution may be included in an amount of 50 parts by weight to 200 parts by weight based on 100 parts by weight of the sintered product. The coating layer precursor may specifically be included in an amount of 50 parts by weight to 150 parts by weight, for example, 70 parts by weight to 150 parts by weight based on 100 parts by weight of the sintered product. In this case, since the impurities may be sufficiently washed away and the lithium present in the sintered product does not escape, performance of a battery may not be degraded.

The washing of the second step may be performed in a temperature range of 5°C to 70°C. In a case in which the temperature of the washing process is within the above range, processing costs may not be high.

The washing of the second step may be performed for 10 minutes to 60 minutes. In a case in which the time of the washing process is within the above range, since the lithium present in the oxide does not escape during the washing while the coating layer including the lithium chelate compound is well formed, the performance of the battery may not be degraded.

The drying is to remove moisture from the lithium transition metal oxide containing moisture through the washing process, wherein, after the moisture is removed by using a vacuum pump, the drying may be performed in a temperature range of 60°C to 150°C. Specifically, the drying may be performed in a temperature range of 60°C to 150°C for 12 hours or more.

### Third Step

The third step is a step of preparing a lithium transition metal oxide having a coating layer including a Li-M-O solid solution (where M is at least one element selected from the group consisting of Ti, V, Co, Zr, Nb, Si, Al, and Mo) formed thereon by performing a heat treatment on the lithium transition metal oxide having the coating layer including the lithium chelate compound formed thereon.

The third step is a process of converting the lithium chelate compound (ex. LiNbO(C₂O₄)₂, Li₃Co(NO₂)₆, LiTiO(C₂O₄)₂) into a Li-M-O solid solution through the heat treatment. When heat is applied to the lithium transition metal oxide on which the coating layer including the lithium chelate compound is formed, carbon or nitrogen contained in the lithium chelate compound is removed in a gaseous state while forming CO, CO₂, or NO₂, and a Li-M-O solid solution with excellent lithium ion conductivity and electrical conductivity is formed. That is, the coating layer including the lithium chelate compound becomes a coating layer including a Li-M-O solid solution (where M is at least one selected from the group consisting of Ti, V, Co, Zr, Nb, Si, Al, and Mo), which is a coating layer with excellent lithium ion conductivity and electrical conductivity, after the third step.

The coating layer including the Li-M-O solid solution may have a thickness of 1 nm to 50 nm, particularly 2 nm to 50 nm, and more particularly 5 nm to 10 nm. In this case, internal resistance characteristics and capacity characteristics at high temperatures of the battery may be improved without degrading performance of the positive electrode active material.

The heat treatment may be performed in a temperature range of 500°C to 900°C, particularly 500°C to 800°C, and more particularly 500°C to 700°C. In a case in which the heat treatment temperature is less than 500°C, the carbon or nitrogen contained in the lithium chelate compound may not be well removed, and, in a case in which the heat treatment temperature is greater than 900°C, since the lithium in the lithium transition metal oxide may escape, the capacity may be reduced. In a case in which the heat treatment temperature is within the above range, the coating layer may be formed while maintaining structural stability of the lithium transition metal oxide.

The heat treatment may be performed in an oxygen atmosphere, a nitrogen atmosphere, and an air atmosphere. Specifically, the heat treatment may be performed in an oxygen atmosphere. In this case, the carbon or nitrogen contained in the lithium chelate compound may be well removed, and a uniform oxide coating layer may be formed.

The heat treatment may be performed for 5 hours to 24 hours. In a case in which the heat treatment time is within the above range, a suitable coating layer may be formed and production efficiency may be improved.

### Positive Electrode Active Material

A positive electrode active material according to the present invention includes a lithium transition metal oxide including a secondary particle formed by aggregation of primary particles, wherein a coating layer including a Li-M-O solid solution (where M is at least one element selected from the group consisting of Ti, V, Co, Zr, Nb, Si, Al, and Mo) is formed on a surface of the primary particle.

The positive electrode active material according to the present invention may be one prepared according to the method of preparing a positive electrode active material.

The Li-M-O solid solution may include at least one selected from the group consisting of Li-Nb-O, Li-Co-O, and Li-Ti-O. The Li-M-O solid solution may specifically include at least one selected from the group consisting of LiNbO₂, LiNbO₃, LiCoO₂, and Li₂TiO₃, and more specifically, may include at least one selected from the group consisting of LiNbO₃ and LiCoO₂. In this case, since the lithium ion conductivity and electrical conductivity of the coating layer including the Li-M-O solid solution are excellent, a lithium secondary battery having low internal resistance may be resultantly achieved.

The coating layer including the Li-M-O solid solution may have a thickness of 1 nm to 50 nm, particularly 2 nm to 50 nm, and more particularly 5 nm to 10 nm. In this case, the internal resistance characteristics and capacity characteristics at high temperatures of the battery may be improved without degrading the performance of the positive electrode active material.

The lithium transition metal oxide may have a composition represented by the following Formula 3.

[Formula 3] Liₑ[Ni_{a'}Co_{b'}M¹c_{'}M²d_{'}]O₂-_{f}A_{f}

In Formula 3,
M¹ is at least one element selected from the group consisting of Mn and Al,
M² is at least one element selected from the group consisting of B, Mg, Ca, Si, Ti, V, Cr, Fe, Zn, Ga, Y, Zr, Nb, Mo, Ta, and W,
A is at least one element selected from the group consisting of fluorine (F), chlorine (Cl), bromine (Br), iodine (I), astatine (At), sulfur (S), and selenium (Se), and
0.9≤e≤1.1, 0.6≤a'<1, 0<b'≤0.4, 0<c'≤0.4, 0≤d'≤0.1, a'+b'+c'+d'=1, and 0≤f≤0.2.

a' represents an atomic fraction of nickel among metallic elements other than lithium in the positive electrode active material, wherein a may satisfy 0.6≤a'<1, 0.6≤a'≤0.98, or 0.7≤a'≤0.95.

b' represents an atomic fraction of cobalt among the metallic elements other than lithium in the positive electrode active material, wherein b' may satisfy 0<b'≤0.4, 0.01≤b'≤0.4, or 0.01≤b'≤0.3.

c' represents an atomic fraction of an M¹ element among the metallic elements other than lithium in the positive electrode active material, wherein c' may satisfy 0<c'≤0.4, 0.01≤c'≤0.4, or 0.01≤c'≤0.3.

d' represents an atomic fraction of an M² element among the metallic elements other than lithium in the positive electrode active material, wherein d' may satisfy 0≤d'≤0.1 or 0≤d'≤0.05.

### Positive Electrode

Also, the present invention may provide a positive electrode for a lithium secondary battery which includes the positive electrode active material prepared by the above-described method.

Specifically, the positive electrode includes a positive electrode collector and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the positive electrode active material.

The positive electrode active material may be included in an amount of 80 wt% to 99 wt%, for example, 85 wt% to 98 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on the total weight of the positive electrode active material layer.

The binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector. In this case, types and amounts of the positive electrode active material, the binder, and the conductive are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

### Lithium Secondary Battery

Furthermore, in the present invention, an electrochemical device including the positive electrode may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Example

A positive electrode active material precursor having a composition represented by Ni_{0.88}Co_{0.05}Mn_{0.07}(OH)₂ was prepared.

LiOH·H₂O, as a lithium-containing raw material, was prepared in an amount such that a molar ratio of the positive electrode active material precursor to the LiOH·H₂O was 1:1.07.

### Example 1

The positive electrode active material precursor and the LiOH·H₂O were mixed and then sintered at 780°C for 10 hours in an oxygen atmosphere having an oxygen concentration of 100 vol% to prepare a sintered product.

A washing solution was prepared by dissolving 0.49 part by weight of ammonium niobium oxalate in 130 parts by weight of distilled water.

After 130 parts by weight of the washing solution was added to 100 parts by weight of the sintered product and mixed to wash the sintered product for 5 minutes, filtering was performed for 2 minutes using a vacuum pump and drying was performed in a vacuum oven at 130°C for 24 hours to prepare LiNi_{0.88}Co_{0.05}Mn_{0.07}O₂ (hereinafter, referred to as "A") on which a coating layer including lithium niobium oxalate (LiNbO(C₂O₄)₂) was formed.

A was heat-treated at 600°C for 10 hours in an oxygen atmosphere having an oxygen concentration of 100 vol% to prepare LiNi_{0.88}Co_{0.05}Mn_{0.07}O₂ (positive electrode active material 1) on which a coating layer including a Li-Nb-O solid solution (including a compound represented by LiNbO₃) was formed.

### Example 2

Positive electrode active material 2 was prepared in the same manner as in Example 1 except that LiNi_{0.88}Co_{0.05}Mn_{0.07}O₂ (hereinafter, referred to as "B"), on which a coating layer including lithium niobium oxalate (LiNbO(C₂O₄)₂) was formed, was prepared by using a washing solution which was prepared by dissolving 0.98 part by weight of ammonium niobium oxalate in 130 parts by weight of distilled water.

### Example 3

Positive electrode active material 3 was prepared in the same manner as in Example 1 except that LiNi_{0.88}Co_{0.05}Mn_{0.07}O₂ (hereinafter, referred to as "C"), on which a coating layer including lithium cobalt nitrite (Li₃Co(NO₂)₆) was formed, was prepared by using a washing solution which was prepared by dissolving 0.49 part by weight of cobalt sodium nitrite in 130 parts by weight of distilled water.

### Comparative Example 1

The positive electrode active material precursor and the LiOH·H₂O were mixed and then sintered at 780°C for 10 hours in an oxygen atmosphere having an oxygen concentration of 100 vol% to prepare a sintered product.

After the sintered product and distilled water were mixed in a weight ratio of 1:1.3 to wash the sintered product for 5 minutes, filtering was performed for 2 minutes using a vacuum pump and drying was performed in a vacuum oven at 130°C for 24 hours to prepare LiNi_{0.88}Co_{0.05}Mn_{0.07}O₂ (positive electrode active material 4).

### Experimental Examples

### Experimental Example 1: Structural Analysis of Positive Electrode Active Material

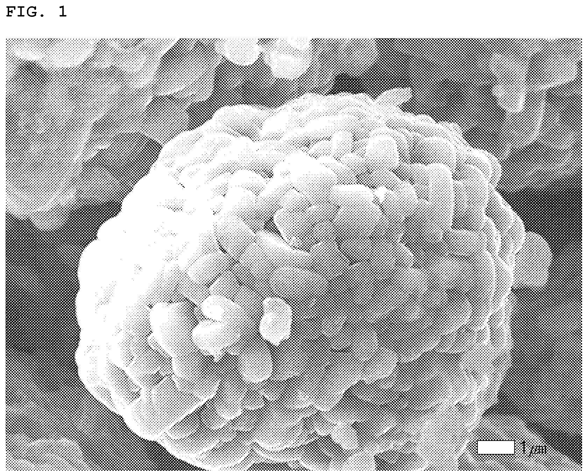

An image of the positive electrode active material 1 was obtained using a scanning electron microscope (SEM) (QUANTA, FEG 256), and the image is illustrated in FIG. 1.

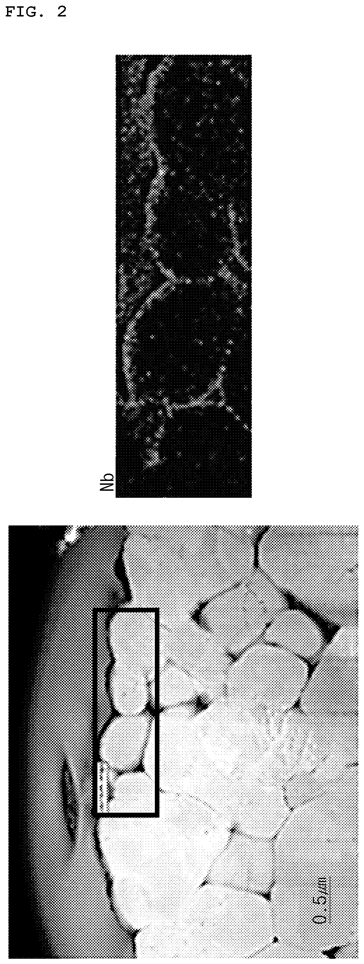

Transmission electron microscope (TEM)-energy dispersive X-ray spectroscopy (EDS) mapping data of the positive electrode active material 1 were obtained using a TEM (FEI Titan G2 80-200 ChemiSTEM), and the TEM-EDS mapping data are illustrated in FIG. 2.

Referring to FIGS. 1 and 2, it may be confirmed that the positive electrode active material 1 included a secondary particle formed by aggregation of primary particles, and it may be confirmed that surfaces of the primary particles were uniformly coated with a Li-Nb-O solid solution.

### Experimental Example 2: Evaluation of Amount of Residual Lithium Remaining in the Lithium Transition Metal Oxide After Washing and Amount of Residual Lithium Remaining in the Prepared Positive Electrode Active Material

After 5 g of each of A of Example 1, B of Example 2, C of Example 3, and the positive electrode active material 4 of Comparative Example 1 was put in 100 g of distilled water and mixed for 5 minutes, filtering was performed. After the filtering, amounts of Li₂CO₃ and LiOH dissolved in the distilled water were measured by titration using a pH meter, and the results thereof are presented in Table 1.

**[Table 1]**

| | Li₂CO₃ (wt%) | LiOH (wt%) |
|---|---|---|
| A | 0.08 | 0.348 |
| B | 0.07 | 0.347 |
| C | 0.164 | 0.354 |
| Positive electrode active material 4 | 0.256 | 0.247 |

Referring to Table 1, with respect to A, B, and C which were respectively formed by washing the sintered products using the washing solutions in which ammonium niobium oxalate or cobalt sodium nitrite was dissolved, it may be confirmed that an amount of residual lithium, particularly, an amount of lithium carbonate was significantly less than that of the positive electrode active material 4. The reason for this is that niobium oxalate anions or cobalt nitrite anions reacted with residual lithium ions present in the washed product to form a coating layer including lithium niobium oxalate or lithium cobalt nitrite.

As a reference, the reason that an amount of lithium hydroxide of the positive electrode active material 4 was smaller than those of the examples is because solubility of LiOH was higher in the water used as the washing solution in Comparative Example 1.

### Experimental Example 3: Half-cell Characteristic Evaluation

Lithium secondary batteries were prepared by using the positive electrode active materials prepared in Examples 1 to 3 and Comparative Example 1, and initial charge capacity, initial discharge capacity, capacity retention, and internal resistance were evaluated for each of the lithium secondary batteries.

Specifically, each of the positive electrode active materials prepared in Examples 1 to 3 and Comparative Example 1, a carbon black conductive agent, and a PVdF binder were mixed in an NMP solvent at a weight ratio of 97.5:1.0:1.5 to prepare a positive electrode slurry. One surface of an aluminum current collector was coated with the positive electrode slurry, dried at 130°C, and then roll-pressed to prepare a positive electrode. A lithium (Li) metal disk was used as a negative electrode. After an electrode assembly was prepared by disposing a separator between the positive electrode and negative electrode prepared as described above, a lithium secondary battery was prepared by disposing the electrode assembly in a battery case and then injecting an electrolyte solution into the case. In this case, as the electrolyte solution, an electrolyte solution, in which 1 M LiPF₆ was dissolved in an organic solvent of EC/EMC/DEC (3/3/4, vol%), was injected to prepare the lithium secondary battery.

Each lithium secondary battery prepared as described above was charged at a constant current of 0.1 C to 4.25 V at 25°C and then was discharged at a constant current of 0.1 C until the voltage reached 3.0 V. Initial charge capacity and initial discharge capacity values are presented in Table 2. Also, a DCIR value, which was obtained by dividing a voltage after 60 seconds in an initial discharge cycle by a current, is presented in Table 2.

In addition, the charge and discharge cycle was repeated 20 times at a constant current of 0.33 C in a range of 3.0 V to 4.25 V at 45°C to measure capacity of the lithium secondary battery, and, particularly, a ratio of 20^{th} cycle capacity to 1^{st} cycle capacity was set as a capacity retention and the capacity retention is presented in Table 2 below. Furthermore, a ratio of DCIR obtained in a 20^{th} discharge cycle to DCIR obtained in the first discharge cycle was set as a resistance increase rate, and the resistance increase rate is presented in Table 2 below.

**[Table 2]**

| | Initial charge capacity at 25°C (mAh/g) | Initial discharge capacity at 25°C (mAh/g) | DCIR at 25°C (Ω) | Capacity retention at 45°C (%) | Resistanc e increase rate (%) at 45°C |
|---|---|---|---|---|---|
| Example 1 | 228.6 | 207.5 | 16.8 | 98.31 | 116 |
| Example 2 | 229.3 | 207.9 | 16.3 | 98.00 | 120 |
| Example 3 | 229.7 | 206.2 | 16.3 | 98.20 | 120 |
| Comparativ e Example 1 | 228.7 | 208.8 | 17.8 | 97.73 | 123 |

Referring to Table 2, with respect to the batteries including the positive electrode active materials of Examples 1 to 3, it may be confirmed that initial charge capacities and initial discharge capacities were at an equivalent level to, capacity retentions at a high temperature were better than, and internal resistances were lower than that of the battery including the positive electrode active material of Comparative Example 1. The reason for this is that the amount of the residual lithium remaining in the positive electrode active materials was small, and the positive electrode active materials included the coating layer including the Li-M-O solid solution having high lithium ion conductivity.

## Claims

1. A method of preparing a positive electrode active material, the method comprising:
a first step of preparing a sintered product by mixing a positive electrode active material precursor, which is a transition metal hydroxide or transition metal oxyhydroxide, and a lithium-containing raw material and sintering the mixture;
a second step of preparing a lithium transition metal oxide having a coating layer including a lithium chelate compound formed thereon by washing the sintered product using a washing solution, in which a coating layer precursor including a chelate anion is included, and drying the sintered product; and
a third step of preparing a lithium transition metal oxide having a coating layer including a lithium (Li)-M-O solid solution (where M is at least one element selected from the group consisting of niobium (Nb), cobalt (Co), titanium (Ti), vanadium (V), zirconium (Zr), silicon (Si), aluminum (Al), and molybdenum (Mo)) formed thereon by performing a heat treatment on the lithium transition metal oxide having the coating layer including the lithium chelate compound formed thereon,
wherein the chelate anion comprises at least one metal selected from the group consisting of Nb, Co, Ti, V, Zr, Si, Al, and Mo and at least one ligand selected from the group consisting of oxalate, nitrite, carboxylate, borate, phosphate, and acetate.

2. The method of claim 1, wherein the positive electrode active material precursor has a composition represented by Formula 1 or Formula 2:
[Formula 1] [NiₐCO_{b}M¹_{c}M²_{d}](OH)₂
[Formula 2] [NiₐCO_{b}M¹_{c}M²_{d}]O·OH
wherein, in Formula 1 and Formula 2,
M¹ is at least one element selected from the group consisting of manganese (Mn) and aluminum (Al),
M² is at least one element selected from the group consisting of boron (B), magnesium (Mg), calcium (Ca), silicon (Si), titanium (Ti), vanadium (V), chromium (Cr), iron (Fe), zinc (Zn), gallium (Ga), yttrium (Y), zirconium (Zr), niobium (Nb), molybdenum (Mo), tantalum (Ta), and tungsten (W), and
0.6≤a<1, 0<b≤0.4, 0<c≤0.4, 0≤d≤0.1, and a+b+c+d=1.

3. The method of claim 1, wherein the positive electrode active material precursor and the lithium-containing raw material are mixed in a molar ratio of 1:1.0 to 1:1.10.

4. The method of claim 1, wherein the sintering is performed in a temperature range of 700°C to 950°C.

5. The method of claim 1, wherein the chelate anion comprises at least one transition metal selected from the group consisting of Nb, Co, and Ti and at least one ligand selected from the group consisting of oxalate and nitrite.

6. The method of claim 1, wherein the coating layer precursor further comprises at least one cation selected from the group consisting of an ammonium salt (NH₄⁺), a sodium salt (Na⁺), a potassium salt (K⁺), a hydrogen cation (H⁺), and a lithium salt (Li⁺).

7. The method of claim 1, wherein the coating layer precursor is at least one selected from the group consisting of ammonium niobium oxalate, sodium cobalt nitrite, ammonium titanium oxalate, and sodium titanium oxalate.

8. The method of claim 1, wherein the coating layer precursor included in the washing solution is included in an amount of 0.1 part by weight to 5 parts by weight based on 100 parts by weight of the sintered product.

9. The method of claim 1, wherein the washing is performed by adding the washing solution in an amount of 50 parts by weight to 300 parts by weight based on 100 parts by weight of the sintered product.

10. The method of claim 1, wherein the heat treatment is performed in a temperature range of 500°C to 900°C.

11. A positive electrode active material comprising:
a lithium transition metal oxide including a secondary particle formed by aggregation of primary particles,
wherein a coating layer including a lithium (Li)-M-O solid solution is formed on a surface of the primary particle,
wherein M is at least one element selected from the group consisting of titanium (Ti), vanadium (V), cobalt (Co), zirconium (Zr), niobium (Nb), silicon (Si), aluminum (Al), and molybdenum (Mo).

12. The positive electrode active material of claim 11, wherein the Li-M-O solid solution comprises at least one selected from the group consisting of Li-Nb-O, Li-Co-O, and Li-Ti-O.

13. The positive electrode active material of claim 11, wherein the coating layer including the Li-M-O solid solution has a thickness of 1 nm to 50 nm.

14. The positive electrode active material of claim 11, wherein the lithium transition metal oxide has a composition represented by Formula 3:
[Formula 3] Liₑ[Ni_{a'}Co_{b'}M¹_{c'}M²_{d}']O_{2-f}A_{f}
wherein, in Formula 3,
M¹ is at least one element selected from the group consisting of manganese (Mn) and aluminum (Al),
M² is at least one element selected from the group consisting of boron (B), magnesium (Mg), calcium (Ca), silicon (Si), titanium (Ti), vanadium (V), chromium (Cr), iron (Fe), zinc (Zn), gallium (Ga), yttrium (Y), zirconium (Zr), niobium (Nb), molybdenum (Mo), tantalum (Ta), and tungsten (W),
A is at least one element selected from the group consisting of fluorine (F), chlorine (Cl), bromine (Br), iodine (I), astatine (At), sulfur (S), and selenium (Se), and
0.9≤e≤1.1, 0.6≤a'<1, 0<b'≤0.4, 0<c'≤0.4, 0≤d'≤0.1, a'+b'+c'+d'=1, and 0≤f≤0.2.
